(19) Europäisches Patentamt

European Patent Office

Office européen des brevets

(11) **EP 1 043 601 B1**

(12) **EUROPÄISCHE PATENTSCHRIFT**

(45) Veröffentlichungstag und Bekanntmachung des Hinweises auf die Patenterteilung:
**28.09.2005 Patentblatt 2005/39**

(51) Int Cl.⁷: **G01S 13/93**, G01S 13/34

(21) Anmeldenummer: **00104510.3**

(22) Anmeldetag: **10.03.2000**

(54) **Radarverfahren zur Messung von Abständen und Relativgeschwindigkeiten zwischen einem Fahrzeug und einem oder mehreren Hindernissen**

Radar method for mesuring distances and relative speeds between a vehicle and one or more obstacles

Procédé radar pour mesurer des distances et des vitesses relatives entre un véhicule et des obstacles

(84) Benannte Vertragsstaaten:
**AT BE CH CY DE DK ES FI FR GB GR IE IT LI LU MC NL PT SE**

(30) Priorität: **07.04.1999 DE 19915484**

(43) Veröffentlichungstag der Anmeldung:
**11.10.2000 Patentblatt 2000/41**

(73) Patentinhaber: **Volkswagen Aktiengesellschaft 38436 Wolfsburg (DE)**

(72) Erfinder:
• **Lissel, Ernst, Dipl.-Ing. 38442 Wolfsburg (DE)**
• **Rohling, Hermann, Prof. 38304 Wolfenbüttel (DE)**
• **Meinecke, Marc-Michael 38448 Wolfsburg (DE)**

(56) Entgegenhaltungen:
**EP-A- 0 557 945          DE-A- 4 244 608
DE-A- 19 538 309          DE-A- 19 602 437
US-A- 5 212 489           US-A- 5 268 692**

**Beschreibung**

Die Erfindung betrifft ein Radarverfahren zur Messung von Abständen und Relativgeschwindigkeiten zwischen einem Fahrzeug und einem oder mehreren Hindernissen mit den Merkmalen des Oberbegriffes des Anspruches 1.

Derartige Verfahren sind aus dem Stand der Technik bekannt. So offenbart die EP 0 557 945 A2 einen Entfernungs-initialisiertes Maximum-Likelihood-Schätzer zur Detektion und Auflösung von Zielen in einem Radarsystem, das linear frequenzmodulierte Signale mit Signalabschnitten unterschiedlicher Steigung verwendet. Die empfangen Zielechos werden im Empfänger zunächst gewichtet, wobei die Zielechos eine Menge von innerhalb jedes Signalabschnittes beobachteten Detektionen umfassen. Die gewichteten Zielechos werden mittels eines Maximum-Likelihood-Verfahrens, das die Filterposition für den nächsten Signalabschnitt vorhersagt, einander zugeordnet, wobei der Zuordnungsschritt die Detektionen jedes Signalabschnitts gruppiert und dabei davon ausgeht, dass Treffer innerhalb eines Bereichs um eine vorhergesagte Filterposition liegen müssen. Dieser Bereich und die vorhergesagte Filterposition beruhen auf den Beobachtungen aller vorhergehenden Signalabschnitte.

Aus der US 5 268 692 A ist ein FMCW-Radarsystem, das linear frequenzmodulierte Signale mit sechs Signalabschnitten, also drei Paare von Signalabschnitten mit jeweils steigender und fallender Flanke, verwendet, bekannt. Die Signale werden ausgesendet, empfangen, heruntergemischt und mittels einer FFT ausgewertet. Dabei werden für jeden Signalabschnitt die zugehörigen Peakfrequenzen ermittelt und jeweils alle möglichen Paarungen der Peakfrequenzen eines Paars von Signalabschitten (steigende und fallende Frequenzflanke) gebildet. Die Peakfrequenzpaarungen, die jeweils einem durch Entfernung und Relativgeschwindigkeit charakterisierten Ziel entsprechen, jeweils zweier aufeinanderfolgender Paare von Signalabschnitten werden dann nach Übereinstimmungen untersucht und als sog. vermutete Peakfrequenzpaarungen abgespeichert. Die vermuteten Peakfrequenzpaarungen werden schließlich noch gegen die Peakfrequenzpaarungen eines dritten Paars von Signalabschnitten geprüft, und bei Übereinstimmung mit hoher, bei fehlender Übereinstimmung mit niedriger Priorität versehen.

Die US 5 212 489 A offenbart ein Radarsystem, das sich zur Ermittlung der Entfernung und Relativgeschwindigkeit eines Ziels Doppler-invarianter Signale mit frequenzmodulierten Signalabschnitten bedient. Die Empfangssignale werden mit Replikas der Sendesignalform des jeweiligen Signalabschnitts korreliert und dabei unterschiedlich zeitlich verzögert. Man erhält durch die Korrelation die zweidimensionale Ambiguity-Funktion, aufgetragen als Betrag des Korrelationswertes über der Zeit- und Geschwindigkeitsachse. Bei Verwendung einer steigenden und einer fallenden Flanke ergeben sich in der Ambiguity-Funktion zwei sich schneidende Kämme, aus deren Schnittpunkt eindeutig auf die Entfernung und die Relativgeschwindigkeit des Ziels geschlossen werden kann.

Aus der DE 42 44 608 A1 ist ein CW-Radarverfahren (CW-continous wave) bekannt, bei dem das von einem Oszillator erzeugte Sendesignal in frequenzkonstante, ohne Abstand aufeinander folgende Bursts (Signal-Abschnitte) zerlegt ist. Das an den Hindernissen reflektierte Empfangssignal wird dabei in einem zweikanaligen IQ-Mischer mit dem Sendesignal in das Basisband heruntergemischt. Der IQ-Mischer liefert ein komplexes, relativ niederfrequentes Mischerausgangssignal, welches zur Gewinnung von Signalen für die Abstände und Relativgeschwindigkeiten mehrerer Hindernisse genutzt wird.

Während eines Messzyklusses werden bei dem beschriebenen Verfahren vier Messungen mit unterschiedlichen Sendesignalen durchgeführt. In einer ersten Messung erzeugt der Oszillatior zeitlich aufeinander folgende Bursts mit einer Folge von einem Minimal- auf einen Maximalwert linear inkremental ansteigender Frequenz und danach eine Folge von Bursts mit von dem Maximalwert auf den Minimalwert linear inkremental abfallender Frequenz, wobei in beiden Messungen am Ende jedes reflektierten Bursts ein komplexer Abtastwert erfaßt und durch Mischen mit den Sendesignal-Bursts erste bzw. zweite Inphase- und Quadraturphasesignale für die Abstände und die Relativgeschwindigkeiten gewonnen werden. Während einer dritten Messung besteht das Sendesignal aus frequenzgleichen Bursts. Hier wird am Ende jedes reflektierten Bursts ein komplexer Abtastwert zur Gewinnung dritter Inphase- und Quadraturphasesignale für die Relativgeschwindigkeiten zwischen dem Fahrzeug und den Hindernissen durch Mischen mit den Bursts des Sendesignals erfaßt. Dabei wird eine Folge von Bursts mit monoton steigender oder fallender Steigung insgesamt als Chirp bezeichnet.

Alle Mischerausgangssignale der drei Messungen werden mit Fouriertransformationen in relativgeschwindigkeits- und abstandsabhängige Frequenzwerte umgewandelt, die in einem Entfernungs-Relativgeschwindigkeits-Diagramm drei Scharen sich schneidender Geraden darstellen, deren Schnittpunkte potentielle Hindernisse wiedergeben. Dabei kann es sich um tatsächliche Hindernisse oder aber auch um Geisterhindernisse handeln, die durch die mathematische Verknüpfung hervorgerufen wurden. Aus diesem Grund wird während einer vierten Messung ein Sendesignal ausgesendet, dessen Bursts jedoch nicht monoton einander folgen, sondern entsprechend den Koeffizienten eines Restklassen-Codes angeordnet sind. Das während der vierten Messung reflektierte Empfangssignal setzt sich aus der Überlagerung sämtlicher Objektreflexionen mit unterschiedlicher Amplitude und Phase zusammen.

Die Überprüfung auf Richtigkeit und Eindeutigkeit aller Schnittpunktparameter der Geraden im Geschwindigkeits-Abstands-Diagramm, die sich aus ersten drei Messungen ergeben, erfolgt dadurch, daß für jedes der potentiellen Hindernisse ein Mischerausgangssollsignal für das Sendesignal der vierten Messung generiert wird, das dann mit dem Istmischerausgangssignal der vierten Messung korreliert wird. Die besonderen Korrelationseigenschaften des Restklassen-Codes liefern nur für reale Hindernisse einen hohen Korrelationswert und einen niedrigen für Geisterhindernisse.

Die Korrelation beginnt mit dem amplitudenstärksten Objekt. Wird ein reales Hindernis ermittelt, so wird das entsprechende Mischerausgangssollsignal vom Istmischerausgangssignal subtrahiert und die Korrelation in fallender Reihenfolge der Amplitude fortgesetzt, wobei während der Korrelation mit einer normierten Amplitude des Mischerausgangssollsignals gearbeitet wird und nur der Phasenanteil der komplexen Signale betrachtet wird.

Der bei den bekannten Verfahren verwendete IQ-Mischer zur Gewinnung von Inphase- und Quadraturphasesignalen bedingt jedoch eine Reihe von Fehlern, so beispielsweise Offsetfehler, Übersprechen des Modulationssignals auf dem I- und Q- Ausgang, Unsymmetrien der Empfindlichkeit von I- und Q-Ausgang und Orthogonalfehlem zwischen dem I- und Q-Ausgang, so daß eine komplizierte Vorbehandlung der Radardaten im Zeitbereich sowie eine Fehlerkalibierung notwendig wird.

Die DE 195 38 309 A1, von der die vorliegende Erfindung ausgeht, offenbart ein gattungsgemäßes Radarverfahren, bei dem die Sendesignalform und Art der Auswertung der Meßsignale im wesentlichen so durchgeführt werden, wie zuvor anhand der DE 42 44 608 A1 beschrieben worden ist. Die Demodulation der an den Hindernissen reflektierten Empfangssignale erfolgt hier jedoch mit Hilfe der ausgesendeten Sendesignale durch nur einen einkanaligen Mischer, dessen Ausgangssignal nicht das Signal einer Phasensondem Amplitudenkurve ist. Dieses wiederum bildet die Grundlage für eine Signalauswertung, bei der aus dem Sendesignal durch Anwendung einer abgestimmten Sendesignalform mit Hilfe von nicht komplex abgetasteten Radar-Rohdaten die Ermittlung von Zielparametem durchgeführt werden kann und diese Zielparameter als richtig oder falsch eingestuft werden können.

Nachteilig bei dem zuvor genannten Auswerteverfahren ist, daß die Eliminierung der Geisterhindernisse ebenfalls nur mit Hilfe einer besonderen Korrelationskodierung erfolgt. Diese führt gerade bei einer Vielzahl von Hindernissen zu einer hohen Fehlerrate, da aufgrund der hohen Anzahl von Geisterhindernissen diese nicht zuverlässig unterdrückt werden können.

Daher liegt der vorliegenden Erfindung das technische Problem zugrunde, das bekannte CW-Radarverfahren weiter zu vereinfachen, um ein schnelles und gleichzeitig zuverlässiges Auswerten des Mischerausgangssignals zu erreichen.

Das zuvor aufgezeichnete technische Problem wird erfindungsgemäß durch ein Verfahren mit den Merkmalen des kennzeichnenden Teils des Anspruches 1 gelöst.

Erfindungsgemäß werden also statt der bisher verwendeten drei Scharen von Geraden im Entfernungs-Relativgeschwindigkeits-Diagramm nunmehr mindestens vier Scharen von Geraden erzeugt. Ein gültiger Schnittpunkt, also ein reales Hindernis, wird dann erkannt, wenn vier jeweils zu einen der Chirps gehörende Geraden einen gemeinsamen Schnittpunkt bilden, wobei wegen bestehender Messungenauigkeiten ein Schnittpunkt dann als gültig bezeichnet wird, wenn alle vier Geraden einen vorgegebenen Flächenabschnitt innerhalb des Entferungs-Relativgeschwindigkeits-Diagramm schneiden. Dieser Flächenabschnitt wird dadurch definiert, daß von zwei Geraden ein Schnittpunkt berechnet wird, um den ein Umgebungsbereich gebildet wird, durch den die beiden anderen Geraden verlaufen müssen. Dieser Umgebungsbereich wird mathematisch auch als $\varepsilon$-Bereich bezeichnet, wobei $\varepsilon$ ein Parameter für die Größe des Umgebungsbereiches ist.

Die Schnittpunkte werden somit zweifach überprüft, so daß nur noch ein sehr geringer Geisterzielanteil bei den ermittelten und überprüften Schnittpunkten vorhanden ist. Das Auswerteverfahren ist dabei nicht nur zuverlässig, sondern wegen der einfachen mathematischen Beziehungen auch schnell durchzuführen. Die aus dem Stand der Technik bekannte Korrelationskodierung ist nicht mehr erforderlich.

Weitere vorteilhafte Ausgestaltungen der vorliegenden Erfindung sind in den Unteransprüchen angeführt. Im folgenden wird anhand der beigefügten Zeichnung ein erfindungsgemäßes Ausführungsbeispiel des Radarverfahrens im Detail beschrieben.

In der Zeichnung zeigen

Figur 1       das Blockschaltbild einer bei dem erfindungsgemäßen Verfahren benutzten Radareinrichtung,

Figur 2a,b    den Verlauf verschiedener Sendesignale während eines Messzyklusses,

Figur 3       die Verläufe der Sende- und Empfangssignale der Messung A und B und

Figur 4       die während der Messungen A, B, C und D ermittelten Frequenzen in einem Entferungs-Relativgeschwindigkeits-Diagramm.

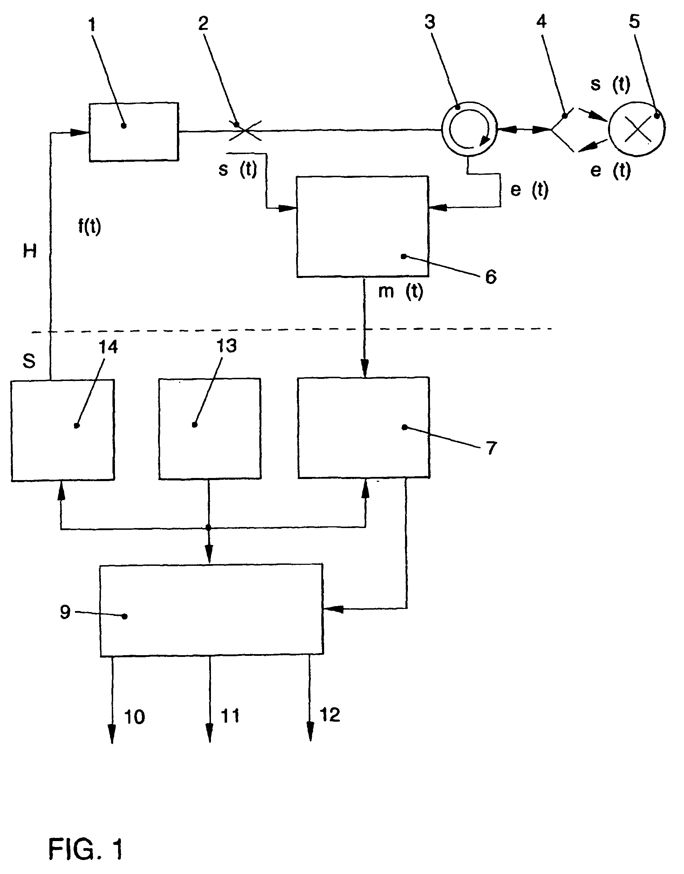

Betrachtet man zunächst das Blockschaltbild der Fig. 1, so gliedert sich die Radareinrichtung in einen Hochfrequenz- oder Mikrowellenteil H und einen Signalverarbeitungsteil S. Der spannungsgesteuerte Oszillator 1, der in überlicher Weise ein kontinuierliches Mikrowellensignal erzeugt, dessen Frequenz beispielsweise mittels einer Varactordiode über mehrere 150 MHz proportional zu einer Steuer-Modulationsspannung f(t) verändert werden kann, dient dem erfindungsgemäßen Verfahren zur Erzeugung eines Sendesignals s(t) mit jeweils frequenzkonstanten Bursts, die über den Koppler 2 und den Zirkulator 3, dessen Arbeitsrichtung durch den Pfeil angegeben ist, zur Sende- und Empfangs-Antenne 4 gelangen. Mit 5 ist ein auf der Fahrbahn vor dem mit der Radareinrichtung ausgerüsteten Fahrzeug befindliches Hindernis bezeichnet. Die Wege des Sendesignale s(t) und der Empfangssignale e(t) sind durch Pfeile gekennzeichnet.

Der Zirkulator 3 trennt die Signale s(t) von den reflektierten Empfangsignalen e(t), so daß nur die Empfangssignale zu dem rechten Eingang des einkanaligen Mischers 6 gelangen, während zu dem in der Figur linken Eingang die durch den Koppler 2 ausgekoppelten Sendesignale s(t) geführt werden. Der einkanalige Mischer 6 bildet die Differenzfrequenz zwischen Sende- und Empfangssignal als reelles Mischerausgangssignal m(t), das zunächst in analoger Form vorliegt. In dem nachgeschalteten Analog-Digital-Wandler 7 erfolgt eine Umsetzung in digitale Signale, die der Signalverarbeitungseinrichtung 9 zugeführt werden, an deren Ausgänge 10 bis 12 Signalwerte für den jeweiligen Abstand, die Relativgeschwindigkeit und die Amplitude, d.h. die Hindernisgröße vorliegen. Die Signalverarbeitungseinheit 9, der der Taktgeber 13 zugeordnet ist, dient seinerseits über den Code-Generator 14 zur Erzeugung der Steuerspannung f(t) für den Oszillator 1.

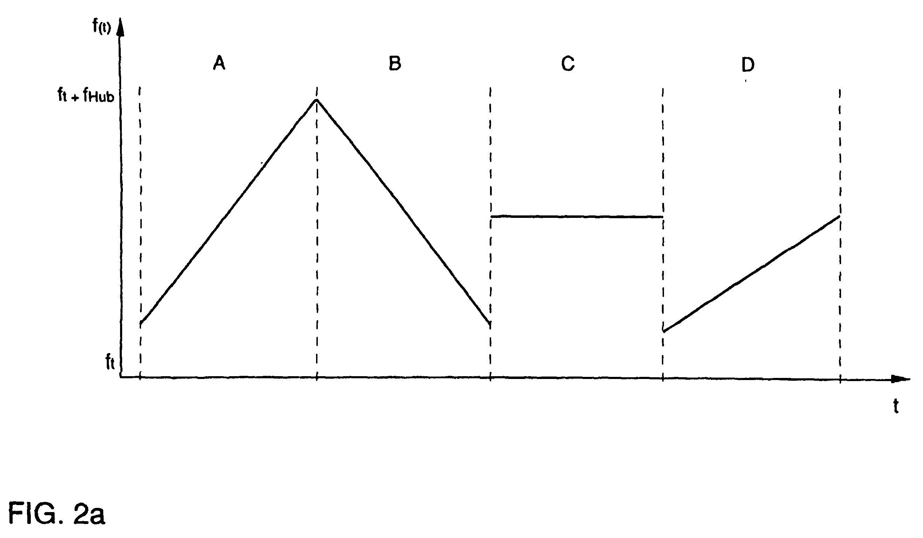

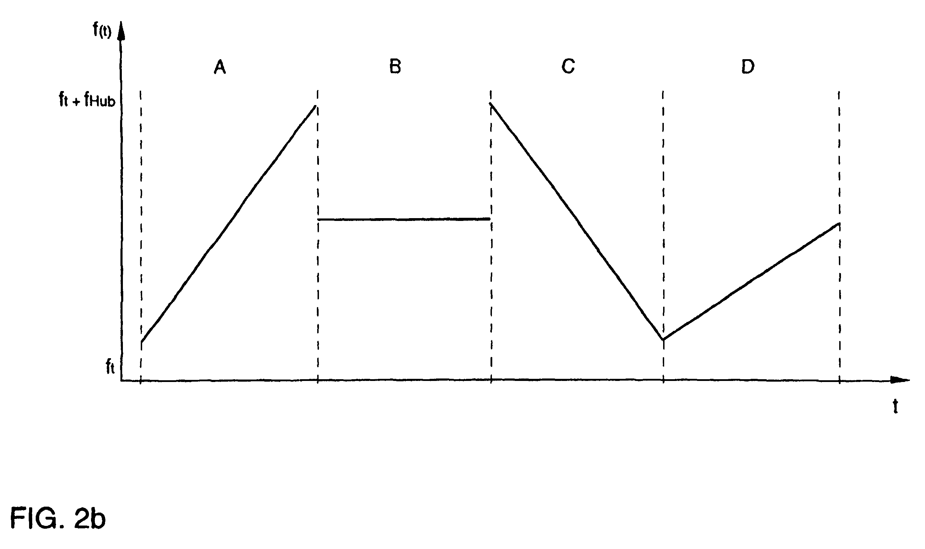

Bei dem erfindungsgemäßen Verfahren wird das Sendesignal s(t), dessen Sendefrequenz f über die Zeit t in Fig. 2 dargestellt ist, in vier unterschiedlichen Blöcken A, B, C und D ausgesendet. Alle vier Messungen erfolgen dabei sequenziell, d. h., es erfolgt zunächst die Messung A, dann entsprechend die Messung B und sofort. Die in den Figuren 2a und 2b dargestellten Frequenzverläufe der Blöcke A-D, die auch als Chirps bezeichnet werden, sind dadurch charakterisiert, daß in den verschiedenen Chirps A-D die Frequenzverläufe über die Zeit unterschiedliche Steigungen $m_1$, $m_2$, $m_3$ und $m_4$ aufweisen. Ein wichtiges Kriterium ist dabei, daß alle vier Steigungen $m_1$ bis $m_4$ unterschiedlich gewählt sind.

Ein typischer Verlauf ist in Figur 2a dargestellt, bei dem in den beiden Chirps A und B der Oszillator 1 der Radareinrichtung durch eine entsprechende Steuerspannung so angesteuert wird, daß er zunächst ausgehend von einer Mindestfrequenz eine linear auf einen Maximalwert ansteigende Frequenzfolge erzeugt. Während des Chirps B erzeugt der Oszillator 1 dagegen ausgehend von der Maximalfrequenz eine lineare Frequenzfolge mit entgegengesetzter Steigung, so daß schließlich wieder die Mindestfrequenz erreicht wird. Dem gegenüber erfolgt während des Blocks C ein Frequenzverlauf mit einer Steigung $m_3$ = 0. Schließlich erfolgt während des Blocks D ein linearer Frequenzanstieg ausgehend von der Mindestfrequenz mit einer Steigung $m_4$, die halb so groß wie die Steigung $m_1$ des Frequenzverlaufes des Blocks A ist.

Der Frequenzverlauf in Fig. 2b unterscheidet sich von dem in Fig. 2a dadurch, daß die Frequenzverläufe der beiden Blöcke B und C miteinander vertauscht sind. Darüber hinaus sind weitere Variationen der verschiedenen Frequenzverläufe möglich, da die einzelnen Blöcke A-D unabhängig von einander sind und jeweils einer separaten Auswertung zugeführt werden.

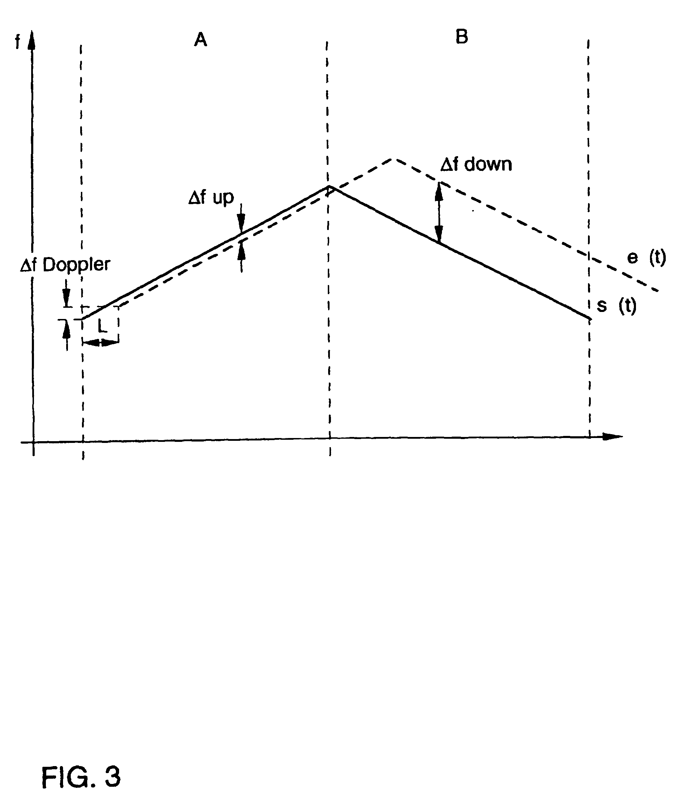

In Fig. 3 sind in einem Frequenz-Zeit-Diagramm die Verläufe des Sendesignals s(t) und des reflektierten Empfangssignals e(t) der Messungen A und B gemäß Fig. 2a wiedergegeben. Mit L ist die Echolaufzeit, mit $\Delta f_{Doppler}$ die Doppelfrequenz bezeichnet. Daraus sowie aus den Frequenzdifferenzen $\Delta f_{up}$ und $\Delta f_{down}$ ergeben sich für die Relativgeschwindigkeit und den Abstand bzw. die Entfernung die Beziehung

$$k = \Delta f_{Doppler} = \left( \frac{\Delta f_{down} - \Delta f_{up}}{2} \right)$$

*und*

$$l = \Delta f_{Entf} = \left( \frac{\Delta f_{down} + \Delta f_{up}}{2} \right).$$

Ein CW-Radar ist durch die Entfernungsauflösung $\Delta R$, durch die maximale Reichweite $R_{max}$, durch die Auflösung der Geschwindigkeit $\Delta v$ und durch den Bereich der verarbeiteten Relativgeschwindigkeit $v_{Rel,min}$ bis $v_{Rel,max}$ charakterisiert. Dabei sind die beiden relevanten Beziehungen der Radarparameter zu dem Sendesignal gegeben durch

$$\Delta R = \left(\frac{2f_{Hub,Radar}}{c}\right)^{-1},$$

$$\Delta v = \left(\frac{2T_{Block,Radar}}{\lambda}\right)^{-1}.$$

Wie bereits in Bezug auf Fig. 2 ausführlich dargestellt worden ist, besteht das Sendesignal des CW-Radars aus einer Sequenz von linearen Chirps jeweils unterschiedlicher Steigung. Die Steigung $m_i$ eines einzelnen Chirps i, mit i = A, B, C, D, wird definiert durch

$$m_i = \frac{f_{Hub,Chirp\,i}}{f_{Hub,Radar.}}$$

Jede nach den Messungen A bis D ausgeführte Fouriertransformation ergibt durch Reflektionen von Hindernissen begründete Spektrallinien in den jeweiligen Fourierspektren. Ist die Steigung $m_i$ ungleich 0, so gelten die oben angegebenen Bezeichnungen für k und l, die die Peakposition $\kappa$ in Fourierspektrum charakterisieren. Ist die Steigung $m_i$ gleich 0, wie es in den Chirps C in Fig. 2a und B in Fig. 2b der Fall ist, so sind die durch die Maxima angezeigten Frequenzen gleich den Dopplerfrequenzen der Hindernisse.

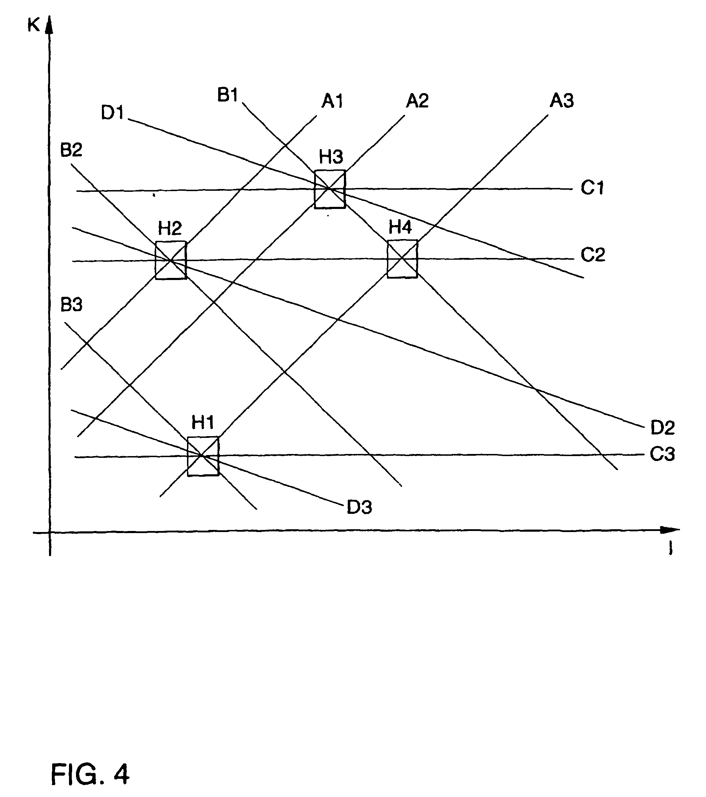

Ausgehend von den aufgefundenen Peaks im Fourierspektrum erfolgt die Suche nach potentiellen Hindernissen in einem Entfernungs-Relativgeschwindigkeits-Diagramm (Fig. 4), wobei die in den Chirps A-D ermittelten Frequenzen jeweils durch Scharen sich schneidender Geraden gekennzeichnet sind. Die in Fig. 4 dargestellten Geraden A1, A2 und A3 beziehen sich auf den Chirp A, die Geraden B1, B2 und B3 auf den Chirp B, die Geraden C1, C2 und C3 auf den Chirp C und die Geraden D1, D2 und D3 auf den Chirp D.

Die Information aus einem verarbeiteten Chirp j = A, B, C oder D allein ist mehrdeutig. Sie schränkt die Zielkoordinaten des i-ten Ziels lediglich in einem Freiheitsgrad ein, daß heißt, es gilt die Formel

$$v_{Rel,i} = \frac{\Delta v}{\Delta R} \cdot m_j \cdot R_i + \Delta v \cdot \kappa_j.$$

Daher werden mehrere Chirps unterschiedlicher Steigung genutzt, um eindeutige Messungen im Schnittpunkt dieser Geraden zu erreichen. Dazu wird erfindungsgemäß folgendermaßen vorgegangen.

Zunächst werden alle idealen Kreuzungspunkte $R_i$, $v_{Rel,i}$ aller Geraden aus den beiden Blöcken A und B aus allen gefundenen Frequenzpositionen $\kappa_{1,n}$ bzw. $\kappa_{2,p}$ nach den Beziehungen

$$R_i = \Delta R \cdot \frac{\kappa_{2,p} - \kappa_{1,n}}{m_1 - m_2};$$

$$v_{Rel,i} = \Delta v \cdot \frac{m_1 \kappa_{2,p} - m_2 \kappa_{1,n}}{m_1 - m_2}.$$

berechnet. Sämtliche Schnittpunkte kommen als potentielle Hindernisse in Frage, jedoch ist die Rate der Geisterhindernisse relativ hoch.

Die im ersten Schritt aufgefundenen Kreuzungspunkte $R_i$, $v_{Rel,i}$ werden durch die aufgefundenen Peakpositionen innerhalb des Blocks C validiert. Dabei lautet das Validierungskriterium, das in dem Spektrum des dritten Blocks C ein Peak an der Frequenzposition $\kappa_{3,q}$ existiert, für den gilt:

$$\kappa_{3,q} - \varepsilon_1 \le \left(\frac{v_{Rel,i}}{\Delta v} - m_3 \cdot \frac{R_i}{\Delta R}\right) \le \kappa_{3,q} + \varepsilon_1$$

Daraus ergibt sich die in Fig. 4 dargestellte Situation, daß insgesamt vier Schnittpunkte H1, H2, H3 und H4 existieren, in denen jeweils drei der Geraden der aus den Blocks A, B und C ermittelten Peakpositionen zusammenlaufen. Schematisch ist weiterhin in Fig. 4 zu jedem der Schnittpunkte H1 bis H4 ein Rechteck eingezeichnet, das den $\varepsilon_1$-Umgebungsbereich jedes der Schnittpunkte H1 bis H4 darstellt. Für jeden der Schnittpunkte H1 bis H4 ist das oben genannte Kriterium erfüllt, da jeweils eine der Geraden C1 bis C3 durch einen der $\varepsilon_1$-Bereiche der Schnittpunkte H1 bis H4 verläuft. Durch den zuvor beschriebenen Validierungsschritt wird die Anzahl der Geisterhindernisse bereits erheblich reduziert, jedoch ist bei einer Vielzahl von Hindernissen davon auszugehen, daß der Anteil der Geisterhindernisse noch zu hoch ist.

Daher wird erfindungsgemäß aus der Menge der durch die Validierung mit dem dritten Block C als gültig klassifizierten Schnittpunkte durch eine zusätzliche Validierung mit dem vierten Block D nach einem ähnlichen Kriterium auf eine sehr sichere Untermenge reduziert. Das Validierungskriterium lautet dabei, daß in dem Spektrum des vierten Chirps D ein Peak an der Frequenzposition $\kappa_{4,r}$ existiert, für den gilt:

$$\kappa_{4,r} - \varepsilon_2 \leq \left( \frac{v_{Rel,j}}{\Delta v} - m_4 \cdot \frac{R_i}{\Delta R} \right) \leq \kappa_{4,r} + \varepsilon_2$$

Dabei ergibt sich bei dem vorliegenden Ausführungsbeispiel die in Fig. 4 dargestellte Situation, daß in den $\varepsilon_2$-Umgebungsbereichen der Schnittpunkte H1, H2 und H3 jeweils eine der Geraden D1, D2 und D3 verläuft, die zu Peakpositionen des vierten Chirps D gehören. Dagegen verläuft keine der Geraden D1, D2 und D3 durch den $\varepsilon_2$-Umgebungsbereich des Schnittpunktes H4, so daß dieser als Geisterhindernis identifiziert und aussortiert werden kann.

Die in dieser Weise zweimal validierten Schnittpunkte können dann als eine Menge mit einem sehr geringen Geisterzielanteil angesehen werden und die entsprechenden Informationen können in der nachfolgenden Datenweiterverarbeitung ausgewertet werden.

In bevorzugter Weise liegen die Werte der Parameter $\varepsilon_1$ und $\varepsilon_2$ im Bereich von 0,3 bis 0,7, vorzugsweise im Bereich von 0,4 bis 0,6 und insbesondere bei 0,5. Dadurch wird sichergestellt, daß eine zuverlässige Validierung gemäß dem ersten und zweiten Validierungskriterium erfolgt und der Geisterzielanteil an der Menge der berechneten Schnittpunkte kann auf ein Minimum beschränkt werden. Die Werte von $\varepsilon_1$ und $\varepsilon_2$ können vorzugsweise gleich groß sein.

**Patentansprüche**

1. Radarverfahren zur Messung von Abständen und Relativgeschwindigkeiten zwischen einem Fahrzeug und einem oder mehreren Hindernissen,

- bei dem ein Sendesignal s(t) ausgesandt wird, das mittels eines Oszillators (1) erzeugt wird und eine Sequenz von Blöcken mit jeweils einem linearen Chirp (A, B, C, D) aufweist,
- bei dem gleichzeitig während des Aussendens des Sendesignals s(t) ein an den Hindernissen (5) reflektiertes Empfangssignal e(t) empfangen wird,
- bei dem das Empfangssignal e(t) mit dem Sendesignal s(t) in einem Mischer (6) zur Gewinnung eines Mischerausgangssignals m(t) gemischt wird und
- bei dem das Mischerausgangssignal m(t) in einer Signalverarbeitungseinrichtung (9) zum Erhalt von Signalwerten für die Abstände $R_i$ der Hindernisse (5) zum Fahrzeug und für die Relativgeschwindigkeiten $v_{Rel,i}$ zwischen dem Fahrzeug und den erfassten Hindernissen (5) verarbeitet wird,
- wobei das Mischerausgangssignal m(t) zu jedem Block (A, B, C, D) des Sendesignals s(t) mit Hilfe einer Fouriertransformation analysiert wird und die Frequenzpositionen $\kappa_i$ der Hindernisse (5) als Peaks im Fouriertransformationsspektrum berechnet werden,**dadurch gekennzeichnet, dass**
- eine Sequenz des Sendesignals s(t) mindestens vier aufeinanderfolgende Blöcke (A, B, C, D) aufweist, die jeweils Steigungen $m_1$, $m_2$, $m_3$, $m_4$ aufweisen, die zu denen der anderen Blöcken (A, B, C, D) verschieden sind, wobei für jede Steigung $m_j$ mit j=1,..,4 gilt:

$$m_j = \frac{f_{Hub,Chirp\,j}}{f_{Hub,Radar}}$$

und wobei $f_{Hub,Radar}$ den Gesamtfrequenzhub des Radarsystems und $f_{Hub,\,Chirp\,j}$ den Frequenzhub im j-ten Block bezeichnet,

- im Entfernungs-Relativgeschwindigkeits-Diagramm die Schnittpunkte $R_i$, $v_{Rel,i}$ aller Geraden aus zwei Blöcken (A, B) von allen N gefundenen Frequenzpositionen $\kappa_{1,n}$ in Block (A) mit n=1,..,N und allen P gefundenen Frequenzpositionen $\kappa_{2,p}$ in Block (B) mit p=1,..,P berechnet werden,
- eine erste Bedingung überprüft wird, ob im Fourierspektrum eines dritten Blocks (C) ein Peak an einer Frequenzposition $\kappa_{3,q}$, mit q=1,..,Q existiert, deren zugeordnete Gerade im Entfernungs-Relativgeschwindigkeits-Diagramm einen Umgebungsbereich des Schnittpunktes $R_i$, $v_{Rel,i}$ schneidet, wobei Q die Anzahl der gefundenen Frequenzpositionen im Block (C) bezeichnet,
- eine zweite Bedingung überprüft wird, ob im Fourierspektrum eines vierten Blocks (D) ein Peak an einer Frequenzposition $\kappa_{4,s}$ mit s=1,..,S existiert, deren zugeordnete Gerade im Entfernungs-Relativgeschwindigkeits-Diagramm einen Umgebungsbereich des Schnittpunktes $R_i$, $v_{Rel,i}$ schneidet, wobei S die Anzahl der gefundenen Frequenzpositionen im Block (D) bezeichnet, und
- die Schnittpunkte $R_i$, $v_{Rel,i}$ dann als gültig betrachtet werden, wenn sie beide Bedingungen erfüllen.

2. Verfahren nach Anspruch 1,
**dadurch gekennzeichnet, dass**
die Schnittpunkte $R_i$, $v_{Rel,i}$ aller Geraden aus den ersten beiden Blocks (A, B) von allen gefundenen Frequenzpositionen $\kappa_{1,n}$ und $\kappa_{2,p}$ nach den Beziehungen

$$R_i = \Delta R \cdot \frac{\kappa_{2,p} - \kappa_{1,n}}{m_1 - m_2},$$

$$v_{Rel,i} = \Delta v \cdot \frac{m_1 \kappa_{2,p} - m_2 \kappa_{1,n}}{m_1 - m_2}$$

berechnet werden, wobei

$$\Delta R = \frac{c}{2 \cdot f_{Hub,Radar}}$$

die Entfernungsauflösung und

$$\Delta v = \frac{\lambda}{2 \cdot T_{Chirp,Radar}}$$

die Auflösung der Geschwindigkeit bedeuten und $T_{Chirp, Radar}$ die Dauer eines Blocks angibt.

3. Verfahren nach Anspruch 1 oder 2,
**dadurch gekennzeichnet, dass**
die berechneten Schnittpunkte $R_i$, $v_{Rel,i}$ **dadurch** überprüft werden, ob im Fourierspektrum eines dritten Blocks (C) ein Peak an einer Frequenzposition $\kappa_{3,q}$ existiert, für die gilt

$$\kappa_{3,q} - \varepsilon_1 \leq \left( \frac{v_{Rel,i}}{\Delta v} - m_3 \cdot \frac{R_i}{\Delta R} \right) \leq \kappa_{3,q} + \varepsilon_1$$

wobei $\varepsilon_1$ einen Parameter vorgegebener Größe darstellt,

4. Verfahren nach einem der Ansprüche 1 bis 3,
**dadurch gekennzeichnet, dass**
die Schnittpunkte $R_i$, $v_{Rel,i}$ **dadurch** überprüft werden, ob im Fourierspektrum eines vierten Blocks (D) ein Peak an einer Frequenzposition $\kappa_{4,s}$ existiert, für die gilt

$$\kappa_{4,s} - \varepsilon_2 \leq \left( \frac{v_{Rel,i}}{\Delta v} - m_4 \cdot \frac{R_i}{\Delta R} \right) \leq \kappa_{4,s} + \varepsilon_2$$

wobei $\varepsilon_2$ einen Parameter vorgegebener Größe darstellt.

**5.** Verfahren nach Anspruch 3 oder 4,
**dadurch gekennzeichnet, dass**
die Werte der Parameter $\varepsilon_1$ und $\varepsilon_2$ im Bereich von 0,3 bis 0,7, vorzugsweise im Bereich von 0,4 bis 0,6 und insbesondere bei 0,5 liegen.

**Claims**

**1.** Radar method for measuring distances and relative speeds between a vehicle and one or more obstructions,

- in which a transmitted signal s(t) is transmitted which is generated by means of an oscillator (1) and has a sequence of blocks which each have a linear chirp (A, B, C, D),
- in which a received signal e(t) which is reflected at the obstructions (5) is received at the same time as the transmitted signal s(t) is transmitted,
- in which the received signal e(t) is mixed with the transmitted signal s(t) in a mixer (6) to obtain a mixer output signal m(t), and
- in which the mixer output signal m(t) is processed in a signal-processing device (9) to acquire signal values for the distances $R_i$ between the obstructions (5) and the vehicle and for the relative speeds $v_{Rel,i}$ between the vehicle and the detected obstructions (5),
- with the mixer output signal m(t) for each block (A, B, C, D) of the transmitted signal s(t) being analysed with the aid of a Fourier transformation, and the frequency positions $\kappa_i$ of the obstructions (5) being calculated as peaks in the Fourier transformation spectrum, **characterized in that**
- a sequence of the transmitted signal s(t) has at least four successive blocks (A, B, C, D) which each have gradients $m_1$, $m_2$, $m_3$, $m_4$ which are different to those of the other blocks (A, B, C, D), where for each gradient $m_j$, where j = 1,...,4:

$$m_j = \frac{f_{shift,chirp\,j}}{f_{shift,radar}}$$

and where $f_{shift,radar}$ denotes the total frequency shift of the radar system, and $f_{shift,chirp\,j}$ denotes the frequency shift in the j-th block,
- the points of intersection $R_i$, $v_{Rel,i}$ of all of the straight lines from two blocks (A, B) are calculated in the distance/relative speed diagram by all N found frequency positions $\kappa_{1,n}$ in block (A), where n = 1,...,N, and all P found frequency positions $\kappa_{2,p}$ in block (B), where p = 1,...,P,
- a first condition is checked as to whether a peak exists at a frequency position $\kappa_{3,q}$, where q = 1,...,Q, in the Fourier spectrum of a third block (C), that straight line in the distance/relative speed diagram which is associated with the said frequency position intersecting a surrounding region of the point of intersection $R_i$, $v_{Rel,i}$, where Q denotes the number of found frequency positions in the block (C),
- a second condition is checked as to whether a peak exists at a frequency position $\kappa_{4,s}$, where s = 1,...,S, in the Fourier spectrum of a fourth block (D), that straight line in the distance/relative speed diagram which is associated with the said frequency position intersecting a surrounding region of the point of intersection $R_i$, $v_{Rel,i}$, where S denotes the number of found frequency positions in the block (D), and
- the points of intersection $R_i$, $v_{Rel,i}$ then being considered to be valid when they satisfy both conditions.

**2.** Method according to Claim 1,
**characterized in that**
the points of intersection $R_i$, $v_{Rel,i}$ of all of the straight lines from the first two blocks (A, B) are calculated from all found frequency positions $\kappa_{1,n}$ and $\kappa_{2,p}$ in accordance with the following equations

**EP 1 043 601 B1**

$$R_i = \Delta R \cdot \frac{\kappa_{2,p} - \kappa_{1,n}}{m_1 - m_2},$$

$$v_{Rel,i} = \Delta v \cdot \frac{m_1 \kappa_{2,p} - m_2 \kappa_{1,n}}{m_1 - m_2},$$

where

$$\Delta R = \frac{c}{2 \cdot f_{shift,radar}}$$

is the distance resolution, and

$$\Delta v = \frac{\lambda}{2 \cdot T_{chirp,radar}}$$

is the resolution of the speed, and $T_{chirp,radar}$ indicates the length of a block.

3. Method according to Claim 1 or 2,
   **characterized in that**
   the calculated points of intersection $R_i$, $v_{Rel,i}$ are checked by determining whether a peak exists at a frequency position $\kappa_{3,q}$ in the Fourier spectrum of a third block (C), for which position

$$\kappa_{3,q} - \varepsilon_1 \le \left( \frac{v_{Rel,i}}{\Delta v} - m_3 \cdot \frac{R_i}{\Delta R} \right) \le \kappa_{3,q} + \varepsilon_1,$$

   where $\varepsilon_1$ represents a parameter of predefined magnitude.

4. Method according to one of Claims 1 to 3,
   **characterized in that**
   the points of intersection $R_i$, $v_{Rel,i}$ are checked by determining whether a peak exists at a frequency position $\kappa_{4,s}$ in the Fourier spectrum of a fourth block (D), for which position

$$\kappa_{4,s} - \varepsilon_2 \le \left( \frac{v_{Rel,i}}{\Delta v} - m_4 \cdot \frac{R_i}{\Delta R} \right) \le \kappa_{4,s} + \varepsilon_2,$$

   where $\varepsilon_2$ represents a parameter of predefined magnitude.

5. Method according to Claim 3 or 4,
   **characterized in that**
   the values of the parameters $\varepsilon_1$ and $\varepsilon_2$ are in the range of 0.3 to 0.7, preferably in the range of 0.4 to 0.6, and in particular are 0.5.

**Revendications**

1. Procédé radar destiné à mesurer des distances et des vitesses relatives entre un véhicule et un ou plusieurs obstacles,

- dans lequel un signal d'émission s(t) est émis qui est généré au moyen d'un oscillateur (1) et présente une séquence de blocs comportant chacun une porteuse pulsée à fréquence glissante linéaire (A, B, C, D),
- dans lequel un signal de réception e(t) réfléchi sur les obstacles (5) est reçu simultanément pendant l'émission du signal d'émission s(t),
- dans lequel le signal de réception e(t) est mélangé au signal d'émission s(t) dans un mélangeur(6) afin d'obtenir un signal de sortie de mélangeur m(t) et
- dans lequel le signal de sortie de mélangeur m(t) est traité dans un dispositif de traitement de signal (9) afin d'obtenir des valeurs de signal pour les distances $R_i$ des obstacles (5) par rapport au véhicule et pour les vitesses relatives $v_{rel,i}$ entre le véhicule et les obstacles (5) saisis,
- le signal de sortie de mélangeur m(t) étant analysé pour chaque bloc (A, B, C, D) du signal d'émission s(t) au moyen d'une transformation de Fourier et les positions de fréquence $\kappa_i$ des obstacles (5) étant calculées en tant que pics dans le spectre de transformation de Fourier, **caractérisé en ce que**
- une séquence du signal d'émission s(t) présente au moins quatre blocs successifs (A, B, C, D) qui présentent respectivement les pentes $m_1, m_2, m_3, m_4$, qui sont différentes de celles des autres blocs (A, B, C, D), où vaut pour chaque pente $m_j$ avec j = 1,...,4:

$$m_j = \frac{f_{excursion,\ porteuse\ pulsée\ à\ fréquence\ glissante\ j}}{f_{excursion,\ radar}}$$

$f_{excursion,\ radar}$ signifiant l'excursion totale de fréquence du système radar et $f_{excursion,\ porteuse\ pulsée\ à\ fréquence\ glissante\ j}$ étant l'excursion de fréquence dans le bloc j,
- dans le diagramme distance - vitesse relative les points d'intersection $R_i, v_{rel,i}$ de toutes les droites de deux blocs (A,B) sont calculés à partir de toutes les N positions de fréquence $\kappa_{1,n}$ trouvées dans le bloc (A) avec n = 1,...,N et à partir de toutes les P positions de fréquence $\kappa_{2,p}$ trouvées dans le bloc (B) avec p = 1,...,P,
- une première condition est vérifiée quant à savoir si dans le spectre de Fourier d'un troisième bloc (C) un pic existe à une position de fréquence $\kappa_{3,q}$ avec q = 1,...,Q dont la droite associée coupe une zone environnante du point d'intersection $R_i, v_{rel,i}$ dans le diagramme distance - vitesse relative, Q signifiant le nombre de positions de fréquence trouvées dans le bloc (C),
- une seconde condition est vérifiée quant à savoir si dans le spectre de Fourier d'un quatrième bloc (D) un pic existe à une position de fréquence $\kappa_{4,s}$ avec s = 1,...,S dont la droite associée coupe une zone environnante du point d'intersection $R_i, v_{rel,i}$ dans le diagramme distance - vitesse relative, S signifiant le nombre de positions de fréquence trouvées dans le bloc (D), et
- les points d'intersection $R_i$, $v_{rel,i}$ sont considérés comme valides lorsqu'ils satisfont aux deux conditions.

2. Procédé selon la revendication 1, **caractérisé en ce que** les points d'intersection $R_i$, $v_{rel,i}$ de toutes les droites des deux premiers blocs (A, B) sont calculés à partir de toutes les positions de fréquence trouvées $\kappa_{1,n}$ et $\kappa_{2,p}$ selon les relations

$$R_i = \Delta R \cdot \frac{\kappa_{2,p} - \kappa_{1,n}}{m_1 - m_2},$$

$$v_{Rel,i} = \Delta v \cdot \frac{m_1 \kappa_{2,p} - m_2 \kappa_{1,n}}{m_1 - m_2}$$

dans lesquelles

$$\Delta R = \frac{c}{2 \cdot f_{excursion,\ radar}}$$

signifie la résolution de distance et

$$\Delta v = \frac{\lambda}{2 \cdot T_{porteuse\ pulsée\ à\ fréquence\ glissante,\ radar}}$$

signifie la résolution de la vitesse et $T_{\text{porteuse pulsée à fréquence glissante, radar}}$ indique la durée d'un bloc.

3. Procédé selon la revendication 1 ou 2, **caractérisé en ce que** les points d'intersection calculés $R_i$, $v_{\text{rel},i}$ sont vérifiés quant à savoir si dans le spectre de Fourier d'un troisième bloc (C) un pic existe à une position de fréquence $\kappa_{3,q}$, pour laquelle vaut

$$\kappa_{3,q} - \varepsilon_1 \leq \left( \frac{v_{\text{Rel},i}}{\Delta v} - m_3 \cdot \frac{R_i}{\Delta R} \right) \leq \kappa_{3,q} + \varepsilon_1$$

où $\varepsilon_1$ représente un paramètre de grandeur prédéterminée.

4. Procédé selon l'une quelconque des revendications 1 à 3, **caractérisé en ce que** les points d'intersection $R_i$, $v_{\text{rel},i}$ sont vérifiés quant à savoir si dans le spectre de Fourier d'un quatrième bloc (D) un pic existe à une position de fréquence $\kappa_{4,s}$, pour laquelle vaut

$$\kappa_{4,s} - \varepsilon_2 \leq \left( \frac{v_{\text{Rel},i}}{\Delta v} - m_4 \cdot \frac{R_i}{\Delta R} \right) \leq \kappa_{4,s} + \varepsilon_2$$

où $\varepsilon_2$ représente un paramètre de grandeur prédéterminée.

5. Procédé selon la revendication 3 ou 4, **caractérisé en ce que** les valeurs des paramètres $\varepsilon_1$ et $\varepsilon_2$ se trouvent dans la plage s'étendant de 0,3 à 0,7, de préférence dans la plage s'étendant de 0,4 à 0,6 et en particulier près de 0,5.

FIG. 1

FIG. 2a

EP 1 043 601 B1

FIG. 2b

FIG. 3

FIG. 4